(19) Europäisches Patentamt / European Patent Office / Office européen des brevets

(11) **EP 4 309 508 A1**

(12) **EUROPEAN PATENT APPLICATION**
published in accordance with Art. 153(4) EPC

(43) Date of publication:
**24.01.2024  Bulletin 2024/04**

(21) Application number: **22771354.2**

(22) Date of filing: **14.03.2022**

(51) International Patent Classification (IPC):
***A23F 3/16*** *(2006.01)*

(52) Cooperative Patent Classification (CPC):
**A23F 3/16; C12N 1/20**

(86) International application number:
**PCT/JP2022/011201**

(87) International publication number:
**WO 2022/196608 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2021  JP 2021046533**

(71) Applicant: **KIRIN HOLDINGS KABUSHIKI KAISHA
Nakano-ku, Tokyo 164-0001 (JP)**

(72) Inventors:
• **SUZUKI, Mihoko
  Tokyo 164-0001 (JP)**
• **YOTSUMOTO, Yuko
  Tokyo 164-0001 (JP)**

(74) Representative: **Hoffmann Eitle
Patent- und Rechtsanwälte PartmbB
Arabellastraße 30
81925 München (DE)**

(54) **PACKAGED TEA BEVERAGE IN WHICH PAPER ODOR IS SUPPRESSED, AND PRODUCTION METHOD FOR SAME**

(57)    An object of the present invention is to provide, for example, a packaged tea beverage in which paper odor is suppressed, and a method for producing the same, as the paper odor occurs in packaged tea beverages containing a JCM5805 strain. The present invention relates to a packaged tea beverage obtainable by a production method comprising a step of including a JCM5805 strain in a tea extract liquid having a tea polyphenol concentration of 10 mg or more/100 mL, and performing a treatment of heating to 100°C or higher.

**EP 4 309 508 A1**

**Description**

**Technical Field**

The present invention relates to a packaged tea beverage in which paper odor is suppressed, and a method for producing the same. More specifically, the present invention relates to a packaged tea beverage in which paper odor is suppressed, and a method for producing the same, as the paper odor occurs in packaged tea beverages containing a *Lactococcus lactis* subsp. *lactis* JCM5805 strain (hereinafter, also simply referred to as a "JCM5805 strain").

**Background Art**

Food and drink products having a health-promoting effect have received growing attention in recent years because of increasing health consciousness. Among others, tea beverages such as green tea beverages or black tea beverages contain a health-supporting ingredient such as catechin or theanine, and there are increasing consumers' demands therefor. Many packaged tea beverages such as packaged green tea beverages or packaged black tea beverages have been launched, because the tea beverages can be drunk, regardless of locations or times.
As for a technique of exploiting lactic acid bacteria in food and drink products, for example, patent document 1 discloses a method for improving the richness (good taste) of coffee by blending dead bacteria of lactic acid bacteria or the like into a packaged coffee beverage.
However, it has not been known so far that paper odor occurs when a JCM5805 strain is contained in a tea extract liquid having a tea polyphenol concentration of 10 mg or more/100 mL; and such paper odor can be suppressed by a treatment of heating to 100°C or higher.

**Prior Art Documents**

**Patent Document**

Patent Document 1: Japanese unexamined Patent Application Publication No. 2019-122316

**Summary of the Invention**

**Object to be Solved by the Invention**

An object of the present invention is to provide, for example, a packaged tea beverage in which paper odor is suppressed, and a method for producing the same, as the paper odor occurs in packaged tea beverages containing a JCM5805 strain.
Paper odor occurs when a JCM5805 strain is contained in a tea extract liquid having a tea polyphenol concentration of 10 mg or more/100 mL. This is a novel problem found for the first time by the present inventors. Although a mechanism under which such paper odor is generated has not yet been elucidated, it is considered that distinctive unusual odor slightly perceived in the JCM5805 strain is reacted or combined with tea polyphenol of a tea component, thereby causing paper odor that imparts disharmony to the flavor of tea beverages.

**Means to Solve the Object**

The present inventors have conducted diligent studies to attain the object of the present invention, and consequently completed the present invention by finding that the paper odor mentioned above is suppressed by allowing a JCM5805 strain to be contained in a tea extract liquid, and performing a treatment of heating to 100°C or higher, in the production of the tea beverage, whereby the object can be attained.
Specifically, the present invention relates to:

(1) a packaged tea beverage obtainable by a production method comprising a step of including a JCM5805 strain in a tea extract liquid having a tea polyphenol concentration of 10 mg or more/100 mL or higher, and performing a treatment of heating to 100°C or higher;
(2) the packaged tea beverage according to (1), wherein a content of the JCM5805 strain is 6 billion or more bacteria/100 mL;
(3) the packaged tea beverage according to (1) or (2), wherein the treatment of heating is a treatment of heating of 111 to 150°C with an $F_0$ value of 1 to 40;
(4) the packaged tea beverage according to any one of (1) to (3), wherein the tea polyphenol concentration is 10 mg/100 mL to 200 mg/100 mL;

(5) the packaged tea beverage according to any one of (1) to (4), wherein the tea extract liquid is a green tea extract liquid, and the packaged tea beverage is a packaged green tea beverage;

(6) a method for producing a packaged tea beverage, comprising a step of including a JCM5805 strain in a tea extract liquid having a tea polyphenol concentration of 10 mg or more/100 mL, and performing a treatment of heating to 100°C or higher, in the production of the packaged tea beverage; and

(7) a method for suppressing paper odor caused by a tea component and a JCM5805 strain in a packaged tea beverage, comprising a step of including a JCM5805 strain in a tea extract liquid having a tea polyphenol concentration of 10 mg or more/100 mL, and performing a treatment of heating to 100°C or higher, in the production of the packaged tea beverage.

Effect of the Invention

The present invention can provide, for example, a packaged tea beverage in which paper odor is suppressed, and a method for producing the same, as the paper odor occurs in packaged tea beverages containing a JCM5805 strain.

**Brief Description of Drawing**

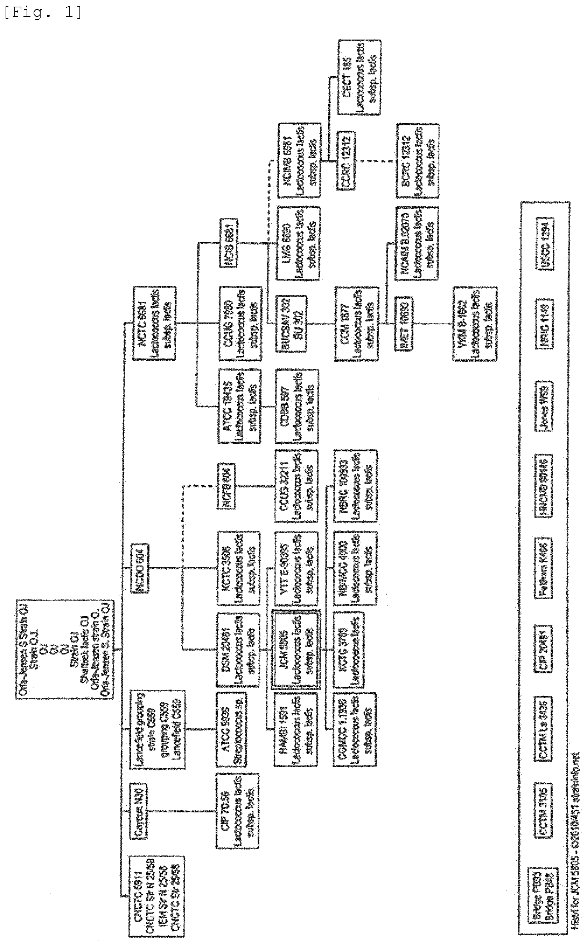

[Figure 1] Figure 1 is a diagram showing the relationship between a *Lactococcus lactis* subsp. *lactis* JCM5805 strain and strains equivalent to the strain (strains derived from the strain and strains from which the strain is derived).

**Mode of Carrying Out the Invention**

The present invention includes embodiments such as

[1] a packaged tea beverage obtainable by a production method comprising a step of including a JCM5805 strain in a tea extract liquid having a tea polyphenol concentration of 10 mg or more/100 mL, and performing a treatment of heating to 100°C or higher;

[2] a method for producing a packaged tea beverage, comprising a step of including a JCM5805 strain in a tea extract liquid having a tea polyphenol concentration of 10 mg or more/100 mL, and performing a treatment of heating to 100°C or higher, in the production of the packaged tea beverage; and

[3] a method for suppressing paper odor caused by a tea component and a JCM5805 strain in a packaged tea beverage, comprising a step of including a JCM5805 strain in a tea extract liquid having a tea polyphenol concentration of 10 mg or more/100 mL, and performing a treatment of heating to 100°C or higher, in the production of the packaged tea beverage.

(Packaged tea beverage according to present invention)

The packaged tea beverage according to the present invention is a packaged tea beverage obtainable by a production method comprising a step of including a JCM5805 strain in a tea extract liquid having a tea polyphenol concentration of 10 mg or more/100 mL, and performing a treatment of heating to 100°C or higher.

(JCM5805 strain)

The "JCM5805 strain" for use in producing the packaged tea beverage according to the present invention may be live bacteria or dead bacteria as long as they are bacteria of the JCM5805 strain. Dead bacteria of the JCM5805 strain are preferred. Such a JCM5805 strain may be a dried product or a non-dried product of the JCM5805 strain and is preferably a dried product of the JCM5805 strain (preferably a dried product of dead bacteria of the JCM5805 strain), more preferably a dry powder of the JCM5805 strain (preferably a dry powder of dead bacteria of the JCM5805 strain), from the viewpoint of favorable preservation stability and from the viewpoint that the paper odor concerned easily occurs, for example.

A method for obtaining the dry powder is not particularly designated. The dry powder can be obtained by a treatment such as freeze drying, hot air drying, or spray drying, and the powder is preferably obtained by spray drying.

In the case of using live bacteria of the JCM5805 strain in producing the packaged tea beverage according to the present invention, basically, most of the lactic acid bacteria also become dead bacteria by a step of a treatment of heating.

The "JCM5805 strain" according to the present invention also includes a bacterial strain equivalent to the JCM5805 strain as long as the effects of the present invention can be obtained. In this context, the equivalent bacterial strain refers to a bacterial strain derived from the JCM5805 strain (bacterial strain A), a bacterial strain from which the JCM5805 strain is derived (bacterial strain B), or a progeny bacterial strain of the bacterial strain A or the bacterial strain B mentioned above. The equivalent bacterial strain may be preserved in other bacterial strain preservation institutes. Figure 1 shows bacterial strains derived from the JCM5805 strain and bacterial strains from which the JCM5805 strain is derived. The bacterial strains equivalent to the JCM5805 strain described in Figure 1 can also be used as the "JCM5805 strain" according to the present invention as long as paper odor occurs from the equivalent bacterial strains and can be suppressed by treatment of heating of 100°C or higher.

A method for preparing the bacteria of the JCM5805 strain is not particularly limited. Examples of the method for preparing the live bacteria of the JCM5805 strain can include a method of collecting bacteria by filtration, centrifugation, or the like from a medium in which the JCM5805 strain has been cultured. Examples of the method for preparing the dead bacteria of the JCM5805 strain can include a method of sterilizing a medium in which the JCM5805 strain has been cultured, and then collecting bacteria by filtration, centrifugation, or the like, and a method of collecting bacteria by filtration, centrifugation, or the like from a medium in which the JCM5805 strain has been cultured, followed by sterilization. If necessary, a drying treatment or a homogenization treatment can be further performed.

An approach for the sterilization is not particularly limited. Not only heating but a common approach of killing bacteria, such as ultraviolet ray or γ ray irradiation, can be used.

In the present invention, the content of the JCM5805 strain in the packaged tea beverage is not particularly limited as long as the effects of the present invention can be obtained. The number of bacteria of the JCM5805 strain per 100 mL of the packaged tea beverage is, for example, "6 billion bacteria/100 mL" or more, preferably 6 to 500 billion bacteria/100 mL, more preferably 15 to 480 billion bacteria/100 mL, still more preferably 16 to 450 billion bacteria/100 mL, even more preferably 16 to 300 billion bacteria/100 mL, further preferably 16 to 150 billion bacteria/100 mL, still further preferably 25 to 50 billion bacteria/100 mL, from the viewpoint of a favorable degree of suppression of paper odor and favorable flavor of the whole packaged tea beverage.

The number of bacteria of the JCM5805 strain can be counted by direct microscopic examination, particle electrical sensing zone, PCR, flow cytometry, or the like.

The number of bacteria per g of a dried product of the bacteria of the JCM5805 strain can be measured by the counting method mentioned above, and the amount of the JCM5805 strain blended into the packaged tea beverage can thereby be adjusted.

The number of bacteria of the JCM5805 strain in the packaged tea beverage can be counted by direct microscopic examination, flow cytometry, or the like. More accurately, a method of taking into consideration the influence of particles derived from other raw materials in the beverage can be used.

(Tea extract liquid)

The "tea extract liquid" according to the present invention means an extract liquid that is obtained by subjecting tea leaves (including a pulverized product of tea leaves such as powdered green tea) to an extraction treatment. Examples of the tea extract liquid used in the present invention include an extract liquid itself from tea leaves (tea leaf extract liquid), and diluted liquids of processed products (e.g., concentrated liquid extracts and powder extracts) thereof. A conventional tea extract raw material (preferably a green tea extract raw material, a black tea extract raw material, and/or an oolong tea extract raw material) that is used in the production of tea beverages can be appropriately selected without particular limitations. In the present specification, examples of the "tea extract liquid" include an unfermented tea extract liquid (e.g., a green tea extract liquid), a fermented tea extract liquid (e.g., a black tea extract liquid), and a semi-fermented tea extract liquid (e.g., an oolong tea extract liquid). Among them, a green tea extract liquid, a black tea extract liquid, and an oolong tea extract liquid are preferred. Among them, a green tea extract liquid is more preferred. In the present invention, the extraction treatment also includes, for example, a form such as a treatment of dissolving a pulverized product of tea leaves such as powdered green tea as long as a tea component is eluted into an extracting solvent.

Tea leaves belonging to a tea tree *Camellia sinensis* var. which is an evergreen tree of the family *Theaceae* can be used as tea leaves for use in the preparation of the tea extract liquid. The tea leaves for use in the production of the tea beverage of the present invention is not particularly limited as long as the effects of the present invention are exerted. Not only tea leaves of unfermented tea typified by green tea such as middle-quality green tea, high-quality green tea, powdered green tea, pot-roasted tea, deep steamed tea, coarse tea, or roasted green tea but tea leaves of semi-fermented tea such as oolong tea, tea leaves of fermented tea such as black tea, or the like can be used. Examples of the tea leaves used in the present invention preferably include green tea leaves. In the present invention, plural types of raw materials and tea leaves may be used.

A method for the extraction treatment of the tea leaves is not particularly limited. Various extraction methods that are generally used in the food processing field can be used and encompass, for example, solvent extraction, air current extraction, and squeeze extraction. If necessary, solid-liquid separation such as precipitation or filtration, or a treatment such as concentration, centrifugation, drying (e.g., spray drying and freeze drying), or powdering may be further carried out.

In this context, the extracting solvent for use in solvent extraction is desirably water (e.g., hard water, soft water, ion exchange water, and natural water). The amount of the extracting solvent can be appropriately selected by those skilled in the art, and is not particularly limited. When the extracting solvent is, for example, water, the amount thereof is 1 to 100 times the amount (mass) of the tea leaves.

The extraction temperature and the extraction time can be appropriately selected by those skilled in the art, and are not particularly limited. When the extracting solvent is, for example, water, the temperature and time thereof are 10 to 120°C and 1 minute to 12 hours.

One example of the extraction treatment includes a method of dipping and stirring tea leaves in water at 0 to 90°C for 1 minute to 24 hours, and then filtering or centrifuging the tea leaves. In this context, conditions, such as a temperature and a time, for extraction are not particularly limited and can be arbitrarily selected and set by those skilled in the art depending on the type or amount of the tea leaves.

In the preparation of the tea extract liquid, a concentrate or a purified product of the tea extract liquid, such as a tea extract or a tea powder, may be used, and a commercially available product, for example, POLYPHENON (manufactured by Mitsui Norin Co., Ltd.), Sunphenon (manufactured by Taiyo Kagaku Co., Ltd.), or Teaflan (manufactured by Itoen, Ltd.) can be used. Such a tea concentrate (preferably a green tea concentrate, a black tea concentrate, and/or an oolong tea concentrate, etc.) or a tea purified product (preferably a green tea purified product, a black tea purified product, and/or an oolong tea purified product, etc.) may be used alone as it is or after being dissolved in or diluted with water, or plural types thereof may be used as a mixture, or the tea concentrate(s) or the tea purified product (s) may be mixed with the tea extract liquid for use.

The tea polyphenol concentration of the tea extract liquid is not particularly limited. The tea polyphenol concentration is 10 mg or more/100 mL because a problem of paper odor arises, and is preferably 10 mg/100 mL to 200 mg/100 mL, more preferably 40 mg/100 mL to 100 mg/100 mL, from the viewpoint of a favorable degree of suppression of paper odor and favorable flavor of the whole packaged tea beverage.

The tea polyphenol concentration of the tea extract liquid can be adjusted by adjusting the amount of the tea leaves used in the production of the tea beverage, or the amount of the concentrate or purified product of the tea extract liquid used.

An arbitrary raw material other than the tea leaves may be blended in the preparation of the tea extract liquid. The tea leaves or the tea extract liquid used in the present invention may be tea leaves or a tea extract liquid fermented with lactic acid bacteria as long as the effects of the present invention can be obtained. It is preferred to be tea leaves (preferably green tea leaves, black tea leaves, and/or oolong tea leaves) or a tea extract liquid (preferably a green tea extract liquid, a black tea extract liquid, and/or an oolong tea extract liquid) that is not fermented with lactic acid bacteria.

(Tea beverage)

Examples of the "tea beverage" according to the present invention include, but are not particularly limited to, an unfermented tea (e.g., green tea) beverage, a fermented tea (e.g., black tea) beverage, and a semi-fermented tea (e.g., oolong tea) beverage, and a blend tea beverage of a portion or the whole of these. Among them, a green tea beverage, an oolong tea beverage, and a black tea beverage are preferred. Among them, a green tea beverage is more preferred.

The tea polyphenol concentration of the packaged tea beverage according to the present invention is not particularly limited. The tea polyphenol concentration is 10 mg or more/100 mL because a problem of paper odor arises, and is preferably 10 mg/100 mL to 200 mg/100 mL, more preferably 40 mg/100 mL to 100 mg/100 mL, from the viewpoint of a favorable degree of suppression of paper odor and favorable flavor of the whole packaged tea beverage.

The tea polyphenol concentration of the packaged tea beverage according to the present invention can be adjusted by adjusting the amount of the tea leaves used in the production of the tea beverage, or the amount of the concentrate or purified product of the tea extract liquid used.

The tea polyphenol concentration of the packaged tea beverage or the tea extract liquid can be measured by use of an official method (iron tartrate absorbance method) described in "Explanation of Analytical Manual for Standard Tables of Food Composition in Japan, 5th edition" edited by Japan Food Research Laboratories (Japan Food Research Laboratories ed., Chuohoki Publishing Co., Ltd., July 2001, p. 252) which is a standard for evaluating the amount of polyphenol in teas. In this measurement method, absorbance (540 nm) can be measured as to a purple component formed through the reaction of polyphenol in a liquid with an iron tartrate reagent, thereby achieving quantification using a calibration curve prepared with ethyl gallate as a standard substance. The quantified value thus obtained is multiplied by 1.5, and the resulting value can be used as the amount of tea polyphenol.

The measurement of the tea polyphenol concentration may employ a Folin-Ciocalteu method, a Folin-Denis method, or the like in addition to the iron tartrate absorbance method described above. The iron tartrate absorbance method is preferred when the iron tartrate absorbance method is suitable.

The packaged tea beverage of the present invention may be supplemented with an additive for beverages that is used in the production of usual beverages, for example, an acidulant, a flavor, a dye, fruit juice, a sweetener (including a high-intensity sweetener), a dairy ingredient, a pulverized product of tea leaves (powdered green tea, dust tea, etc.), and a food additive (e.g., an antioxidant, a preservative, a thickening stabilizer, an emulsifier, a dietary fiber, a pH adjuster, and a bittering agent). The packaged tea beverage of the present invention may contain a flavor. It is preferred to contain no flavor from the viewpoint of enjoying more effects of the present invention.

The tea beverage according to the present invention may not contain ascorbic acid and/or an ascorbic acid-derived substance. It is preferred to contain ascorbic acid and/or an ascorbic acid-derived substance. The "ascorbic acid" or the "ascorbic acid-derived substance" according to the present invention is not particularly limited as long as its blending into beverages is acceptable. The "ascorbic acid" according to the present invention includes not only L-ascorbic acid but its isomer (isoascorbic acid, etc.).

The "ascorbic acid-derived substance" according to the present invention includes a salt of ascorbic acid, a derivative of ascorbic acid, and a salt of a derivative of ascorbic acid. Among them, a salt of ascorbic acid is preferred. Examples of the derivative of ascorbic acid include ascorbyl fatty acid ester (e.g., ascorbyl stearate, ascorbyl palmitate, etc.), ascorbyl phosphate, ascorbyl sulfate, and ascorbic acid glycoside.

Examples of the salt of ascorbic acid or its derivative can include: a salt of an alkali metal such as sodium or potassium; a salt of an alkaline earth metal such as calcium, magnesium, or barium; a salt of a basic amino acid such as arginine or lysine; an ammonium salt such as ammonium salt and tricyclohexylammonium salt; and an alkanolamine salt such as monoisopropanolamine salt, diisopropanolamine salt, and triisopropanolamine salt. Among them, an alkali metal salt and an alkaline earth metal salt are preferred.

Specific examples of the salt of ascorbic acid preferably include sodium ascorbate, calcium ascorbate, and sodium isoascorbate. More specific examples of the derivative of ascorbic acid, or its salt include ascorbyl 2,6-dipalmitate, ascorbyl 6-stearate, sodium ascorbyl 2-phosphate, disodium ascorbyl 2-sulfate, ascorbic acid 2-glucoside, ascorbic acid glucosamine, L-dehydroascorbic acid, ascorbyl 6-palmitate, L-ascorbine tetraisopalmitate, ascorbyl tetra-2-hexyldecanoate, and magnesium L-ascorbyl phosphate.

One type of "ascorbic acid" or "ascorbic acid-derived substance" used in the present invention may be used singly, or two or more types thereof may be used in combination. A commercially available product may be used as the "ascorbic acid" or the "ascorbic acid-derived substance".

The amount of the ascorbic acid and/or the ascorbic acid-derived substance according to the present invention used (the content of the ascorbic acid and/or the ascorbic acid-derived substance in the beverage or the amount of the ascorbic acid and/or the ascorbic acid-derived substance added to the beverage) is not particularly limited as long as the effects of the present invention can be obtained. Examples of the total concentration of the "ascorbic acid" and the "ascorbic acid-derived substance" based on ascorbic anhydride in the packaged tea beverage include 0.01 to 0.5% by weight, 0.01 to 0.2% by weight, 0.02 to 0.1% by weight, and 0.03 to 0.08% by weight.

The ascorbic acid concentration in the tea beverage can be analyzed by use of, for example, HPLC.

The pH of the packaged tea beverage according to the present invention is not particularly limited and is, for example, 4.5 to 7.5, preferably 6 to 7.3.

The pH of the tea beverage can be measured by a routine method using a pH meter.

The tea beverage according to the present invention is a packaged tea beverage. Such a package means a sealed package that can break the contact between contents and outside air. Examples thereof include a metal can, a barrel container, a plastic bottle (e.g., a PET bottle and a cup), a paper container, a bottle, and a pouch container.

(Production of packaged tea beverage)

The packaged tea beverage according to the present invention can be produced by a general method for producing packaged tea beverages except that dead bacteria of a JCM5805 strain are blended into a tea extract liquid having a tea polyphenol concentration of 10 mg or more/100 mL, and a treatment of heating to 100°C or higher is performed. The general method for producing packaged tea beverages is known in the art. For example, a tea extract liquid is prepared, and a tea beverage can be produced through a compounding step and a filling step. In the beverage production of the present invention, an additive for a beverage that is usually used in the formulation of usual tea beverages may be added, and the timing of addition of such an additive is not particularly limited. For more details of the general method for producing tea beverages mentioned above, see, for example, "Soft Drinks, revised new edition" (Korin Co., Ltd.).

Examples of "including a JCM5805 strain in a tea extract liquid having a tea polyphenol concentration of 10 mg or more/100 mL" according to the present invention preferably include adding the JCM5805 strain such that the tea extract liquid contains the JCM5805 strain, and adding the JCM5805 strain such that the packaged tea beverage contains the JCM5805 strain. Other examples thereof include adding the JCM5805 strain to the tea extract liquid itself as well as adding the JCM5805 strain to water for use in the preparation of the tea extract liquid.

In the present invention, the timing of including the JCM5805 strain is not particularly limited as long as it is any stage before a treatment of heating to 100°C or higher in the production of the packaged tea beverage. For example, the JCM5805 strain may be included in the tea extract liquid in a tea extraction step, may be included in water in a tea extraction step, may be included in the tea extract liquid in a compounding step, or may be included in the tea extract liquid immediately before or immediately after a filling step into a package.

The "step of performing a treatment of heating to 100°C or higher" according to the present invention may be a step different from a heat sterilization treatment step of the packaged tea beverage and is preferably a step also serving as a heat sterilization treatment step of the packaged tea beverage from the viewpoint of convenience, etc. Such a step of performing a treatment of heating or performing a heat sterilization treatment may be performed before or after filling into a package.

Conditions for the treatment of heating according to the present invention are not particularly limited as long as the treatment of heating of 100°C or higher is achieved. The temperature and time conditions for the treatment of heating are, for example, conditions of 100 to 150°C (preferably 111°C to 150°C) and a time that attains an $F_0$ value of 0.1 to 40, preferably conditions of 100 to 150°C (preferably 111°C to 150°C) and a time that attains an $F_0$ value of 1 to 30, more preferably conditions of 111 to 145°C and a time that attains an $F_0$ value of 4 to 20, from the viewpoint of a favorable degree of suppression of paper odor and favorable flavor of the whole packaged tea beverage.

The $F_0$ value can be calculated according to the following equation on the basis of a heating temperature ($T°C$) and a heating time ($t$ minutes) at Z value = 10.

$$F_0 \text{ value} = t \times 10^{(T - 121) / 10}$$

In the case of performing a treatment of heating or a heat sterilization treatment in the tea beverage production of the present invention, various heat sterilization methods that are generally used in the food field can be used. Examples of such a heat sterilization method include a method using a hot water spray-type, hot water storage-type, or steam-type retort sterilization apparatus or a tube-type or plate-type liquid continuous sterilization apparatus.

(Packaged tea beverage in which paper odor is suppressed)

The packaged tea beverage of the present invention is a packaged tea beverage in which paper odor is suppressed. In the present specification, the packaged tea beverage in which "paper odor is suppressed" means a packaged tea beverage in which paper odor is suppressed as compared with a packaged tea beverage produced by the same production method using the same raw material as in the packaged tea beverage of the present invention except that the treatment of heating to 100°C or higher is not performed (hereinafter, "also referred to as the control beverage according to the present invention").

The degree of paper odor in a packaged tea beverage or how such a degree of paper odor is (e.g., whether the paper odor is suppressed) as compared with the control beverage according to the present invention can be readily and clearly determined by a trained panel. A general method can be used for evaluation criteria or a way of summarizing evaluation among panels. The number of panels who evaluate the degree of paper odor in the packaged tea beverage may be one. The lower limit of the number of panels can be, for example, three or more, preferably five or more, from the viewpoint of obtaining more highly objective evaluation, and the upper limit of the number of panels can be, for example, seven or less, from the viewpoint of more conveniently carrying out an evaluation test. In the case of two or more panels, the evaluation of the degree of paper odor in the packaged tea beverage may adopt average evaluation of all panels as to the degree of paper odor in the packaged tea beverage. When each evaluation criterion is given a score, an average value of scores of all panels may be adopted as the evaluation of the degree of paper odor in the packaged tea beverage. As mentioned above, in the case of adopting an average value of scores, a value obtained by rounding the average value to the nearest integer may be adopted. In the case of two or more panels, it is preferred for reducing variation in evaluation among the panels to perform an operation of commonalizing evaluation criteria such that the evaluation criteria are as consistent as possible among the panels, before an actual sensory evaluation test. Such a commonalization operation involves, for example, commonalizing, among the panels, the recognition of the degree of paper odor corresponding to a score when the intensity of the paper odor is highest, and then evaluating each sample beverage. It is preferred that owing to such a preliminary commonalization operation as to evaluation criteria, standard deviation of the evaluation of the degree of paper odor by each panel should fall within 0.5, for example, when scores are four grades of 1, 2, 3, and 4.

The degree of paper odor in a packaged tea beverage can be evaluated by, for example, a similar method, preferably the same method, as a sensory evaluation method described in Test 1 in Examples mentioned later. More specifically, when the degree of paper odor of a control beverage scores 4, the degree of paper odor in the packaged tea beverage is evaluated at four grades of "4: equivalent (no suppressive effect)", "3: slightly suppressed", "2: suppressed", and "1: drastically suppressed (almost no paper odor is perceived) ". A packaged tea beverage in which paper odor is reduced (i.e., scores 3 or less) in the four-grade evaluation is preferred as a packaged tea beverage that can be evaluated as the packaged tea beverage in which paper odor is suppressed.

(Method for suppressing paper odor)

The method for suppressing paper odor according to the present invention is not particularly limited as long as it is a method for suppressing paper odor caused by a tea component and a JCM5805 strain in a packaged tea beverage, comprising a step of including a JCM5805 strain in a tea extract liquid having a tea polyphenol concentration of 10 mg or more/100 mL, and performing a treatment of heating to 100°C or higher, in the production of the packaged tea beverage.
Hereinafter, the present invention will be described in detail with reference to Examples. However, the present invention is not limited by these Examples.

Examples

[Test 1] Confirmation of generation of paper odor by including JCM5805 strain in tea extract liquid

The following test was conducted in order to examine how the flavor of a tea beverage was influenced by including a *Lactococcus lactis* JCM5805 strain in a tea extract liquid.
Green tea leaves (Shutoubancha (autumn-winter picking tea)) were placed in hot water of 75°C according to the amount blended (weight (g) per 100 mL) described in Table 1, and subjected to solid-liquid separation by extraction for 6 minutes to prepare a green tea extract liquid. To this green tea extract liquid, a dry powder of dead bacteria of the JCM5805 strain, L-ascorbic acid, and baking soda (sodium bicarbonate) were added and mixed to prepare each sample beverage of Test Examples 5 to 7.
In addition, sample beverages of Test Examples 1 to 4 were also prepared according to the blending described in Table 1.
In all tests (Tests 1 to 5) of Examples of the present application, the bacterial concentration (hundred-million bacteria/100 mL) of the JCM5805 strain in each beverage was measured using a flow cytometer by appropriately diluting the bacteria with a PBS buffer (manufactured by Takara Bio Inc.), and staining the dilution with thiazole orange using BD Cell Viability Kit with BD Liquid Counting Beads (manufactured by Becton, Dickinson and Company) in accordance with the protocol to prepare a sample. The bacterial concentration (hundred-million bacteria/100 mL) is described as a round number of a 2-digit effective number in tables.

[Table 1]

| Amount blended per 100 mL (g) | Test Example | | | | | | |
|---|---|---|---|---|---|---|---|
| | 1 | 2 | 3 | 4 | 5 | 6 | 7 |
| Green tea leaf | - | - | - | 0.58 | 0.58 | 0.58 | 0.58 |
| JCM5805 strain | Predetermined amount | Predetermined amount | Predetermined amount | - | Predetermined amount | Predetermined amount | Predetermined amount |
| L-Ascorbic acid | 0.04 | 0.04 | 0.04 | 0.04 | 0.04 | 0.04 | 0.04 |
| Baking soda | Added so as to attain pH 6.5 | | | | | | |
| pH | 6.5 | 6.5 | 6.5 | 6.5 | 6.5 | 6.5 | 6.5 |
| Heat treatment conditions | None | None | None | None | None | None | None |

The bacterial concentration (hundred-million bacteria/100 mL) of the JCM5805 strain in Test Examples 1 to 3 and 5 to 7 is described in Table 2.

The tea polyphenol concentrations of the sample beverages of Test Examples 4 to 7 using green tea leaves were measured by an official method (iron tartrate absorbance method) described in "Explanation of Analytical Manual for Standard Tables of Food Composition in Japan, 5th edition" edited by Japan Food Research Laboratories (Japan Food Research Laboratories ed., Chuohoki Publishing Co., Ltd., July 2001, p. 252) . The results are shown in Table 2.

Further, flavor evaluation was carried out in which five trained sensory evaluators evaluated the sample beverages of Test Examples 1 to 7 from a free standpoint. The results are summarized in Table 2.

[Table 2]

| | Test Example | | | | | | |
|---|---|---|---|---|---|---|---|
| | 1 | 2 | 3 | 4 | 5 | 6 | 7 |
| JCM5805 strain (hundred-million bacteria/100 mL) | 150 | 300 | 600 | 0 | 150 | 300 | 600 |
| Tea polyphenol concentration (mg/100 mL) | - | - | - | 40 | 40 | 40 | 40 |
| Heat treatment conditions | None | None | None | None | None | None | None |
| Flavor evaluation | Paper odor absent | Paper odor absent | Paper odor absent | Paper odor absent | Paper odor perceived | Paper odor present | Paper odor strong |

As is evident from the results of Table 2, it was shown that no paper odor occurred from any one of the JCM5805 strain and the green tea component (Test Examples 1 to 4), whereas paper odor occurred when both the JCM5805 strain and the green tea component were contained (Test Examples 5 to 7). It was also shown that this paper odor became stronger with increase in the concentration of the JCM5805 strain in the presence of the green tea component (Test Examples 5 to 7).

[Test 2] Evaluation of suppression of paper odor by heat treatment - 1

The following test was conducted in order to examine how the flavor of a tea beverage was influenced by heat-treating a green tea extract liquid containing the JCM5805 strain.

Green tea leaves (Shutoubancha (autumn-winter picking tea)) were placed in hot water of 75°C according to the amount blended (weight (g) per 100 mL) described in Table 3, and subjected to solid-liquid separation by extraction for 6 minutes to prepare a green tea extract liquid. To this green tea extract liquid, a dry powder of dead bacteria of the JCM5805 strain, L-ascorbic acid, and baking soda (sodium bicarbonate) were added and mixed to prepare each sample beverage of Test Examples 8 to 15. The sample beverages of Test Examples 9 to 15 were heated under the heat treatment conditions described in Table 3.

As for the sample beverage of Test Example 16, the dry powder of dead bacteria of the JCM5805 strain was added after heating under the heat treatment conditions described in Table 3 ("post-addition").

[Table 3]

| | | | | | | | | | Test Example |
|---|---|---|---|---|---|---|---|---|---|
| Amount blended per 100 mL (g) | 8 | 9 | 10 | 11 | 12 | 13 | 14 | 15 | 16 |
| Green tea leaf | 0.58 | 0.58 | 0.58 | 0.58 | 0.58 | 0.58 | 0.58 | 0.58 | 0.58 |
| JCM5805 strain | Predetermined amount | | | | | | | | Predetermined amount post-addition |
| L-Ascorbic acid | 0.04 | 0.04 | 0.04 | 0.04 | 0.04 | 0.04 | 0.04 | 0.04 | 0.04 |

(continued)

|  |  |  |  |  |  |  |  |  | Test Example |
|---|---|---|---|---|---|---|---|---|---|
| Baking soda | Added so as to attain pH 6.5 | | | | | | | | |
| pH | 6.5 | 6.5 | 6.5 | 6.5 | 6.5 | 6.5 | 6.5 | 6.5 | 6.5 |
| Heat treatment conditions | None | 90°C 10 min | 101°C 10 min | 111°C 10 min | 121°C 4 min | 121°C 20 min | 121°C 40 min | 121°C 60 min | 121°C 4 min |

The bacterial concentration (hundred-million bacteria/100 mL) in Test Examples 8 to 16 is described in Table 4.

The tea polyphenol concentrations of the sample beverages of Test Examples 8 to 16 using green tea leaves were measured by an official method (iron tartrate absorbance method) described in "Explanation of Analytical Manual for Standard Tables of Food Composition in Japan, 5th edition" edited by Japan Food Research Laboratories (Japan Food Research Laboratories ed., Chuohoki Publishing Co., Ltd., July 2001, p. 252) . The results are shown in Table 4.

Sensory evaluation was carried out in which five trained sensory evaluators evaluated the sample beverages of Test Examples 8 to 16 for the degree of suppression of paper odor based on Test Example 8 with a nonheated sample beverage according to an index given below. An average score (an average score with a decimal point was rounded to the nearest integer) of the five sensory evaluators is shown in Table 4.

<Index for degree of suppression of paper odor>
4: Paper odor equivalent to the nonheated sample beverage (no suppressive effect on paper odor)
3: Paper odor was slightly suppressed as compared with the nonheated sample beverage
2: Paper odor was suppressed as compared with the nonheated sample beverage
1: Paper odor was drastically suppressed as compared with the nonheated sample beverage (almost no paper odor was perceived)

Comprehensive flavor evaluation as a green tea beverage including the degree of suppression of paper odor mentioned above ("comprehensive evaluation") was carried out at 3 grades (poor (indicated by x-mark), good (indicated by circle), and excellent (indicated by double circle)) by five trained sensory evaluators as to the sample beverages of Test Examples 8 to 16. The results and a comment regarding the comprehensive evaluation ("comprehensive comment") are described in Table 4.

[Table 4]

| | Test Example | | | | | | | | |
|---|---|---|---|---|---|---|---|---|---|
| | 8 | 9 | 10 | 11 | 12 | 13 | 14 | 15 | 16 |
| JCM5805 strain (hundred-million bacteria/100 mL) | 600 | 600 | 600 | 600 | 600 | 600 | 600 | 600 | 600 post-addition |
| Tea polyphenol concentration (mg/100 mL) | 40 | 40 | 40 | 40 | 40 | 40 | 40 | 40 | 40 |
| Heat treatment conditions | None | 90°C 10 min | 101°C 10 min | 111°C 10 min | 121°C 4 min | 121°C 20 min | 121°C 40 min | 121°C 60 min | 121°C 4 min |
| Evaluation of suppression of paper odor based on nonheated sample | Paper odor present | Not suppressed | Suppressed | Suppressed | Suppressed | Suppressed | Suppressed | Suppressed | Not suppressed |
| | Control | 4 | 3 | 1 | 1 | 1 | 1 | 1 | 4 |
| Comprehensiv e evaluation | Control | × | ○ | ◎ | ◎ | ◎ | ○ | × | × |
| Comprehensiv e comment | Control | No suppression of paper odor was found | Slightly suppressed | Favorable | Favorable | Favorable | Oxidized odor was slightly present | Oxidized odor ascribable to heating was strong Table 5 | No suppression of paper odor was found |

As is evident from the results of Table 4, no suppression of paper odor was found under the heat treatment conditions of 90°C and 10 minutes (Test Example 9), whereas paper odor was slightly suppressed under the heat treatment conditions of 101°C and 10 minutes (Test Example 10) and paper odor was drastically suppressed under the stronger heat treatment conditions (Test Examples 11 to 15). However, oxidized odor ascribable to heating occurred under the heat treatment conditions of 121°C and 40 minutes (Test Example 14), and oxidized odor ascribable to heating strongly occurred under the heat treatment conditions of 121°C and 60 minutes (Test Example 15). In comprehensive evaluation from the degree of suppression of paper odor and the balance of the presence or absence and degree of oxidized odor, Test Examples 10 and 14 were evaluated as being good, and Test Examples 11 to 13 were evaluated as being excellent.

No suppression of paper odor was found in Test Example 16 in which the JCM5805 strain was included after the heat treatment.

[Test 3] Evaluation of suppression of paper odor by heat treatment - 2

The following test was conducted in order to examine how the tea polyphenol concentration of a green tea extract liquid influenced the flavor of a green tea beverage in the case of heat-treating a green tea extract liquid containing the JCM5805 strain.

Green tea leaves (Shutoubancha (autumn-winter picking tea)) were placed in hot water of 75°C according to the amount blended (weight (g) per 100 mL) described in Table 5, and subjected to solid-liquid separation by extraction for 6 minutes to prepare a green tea extract liquid. To this green tea extract liquid, a dry powder of dead bacteria of the JCM5805 strain, L-ascorbic acid, and baking soda (sodium bicarbonate) were added and mixed to prepare each sample beverage of Test Examples 18 to 23. As for Test Examples 22 and 23, POLYPHENON KN (manufactured by Mitsui Norin Co., Ltd.), which is a green tea extract, was further added thereto according to the amount blended described in Table 5.

The sample beverages of Test Examples 18 to 23 were heated under the heat treatment conditions described in Table 5.

A sample beverage of Test Example 17 was prepared without using green tea leaves and without performing a heat treatment.

[Table 5]

| Amount blended per 100 mL (g) | Test Example | | | | | | |
|---|---|---|---|---|---|---|---|
| | 17 | 18 | 19 | 20 | 21 | 22 | 23 |
| Green tea leaf | 0 | 0.15 | 0.58 | 0.87 | 1.45 | 1.45 | 1.45 |
| JCM5805 strain | Predetermined amount | | | | | | |
| Green tea extract | - | - | - | - | - | 0.233 | 0.349 |
| L-Ascorbic acid | 0.04 | 0.04 | 0.04 | 0.04 | 0.04 | 0.04 | 0.04 |
| Baking soda | Added so as to attain pH 6.5 | | | | | | |
| pH | 6.5 | 6.5 | 6.5 | 6.5 | 6.5 | 6.5 | 6.5 |
| Heat treatment conditions | None | 121°C 4 min | 121°C 4 min | 121°C 4 min | 121°C 4 min | 121°C 4 min | 121°C 4 min |

The bacterial concentration (hundred-million bacteria/100 mL) of the JCM5805 strain in Test Examples 17 to 23 is described in Table 6.

The tea polyphenol concentrations of the sample beverages of Test Examples 18 to 23 using green tea leaves were measured by an official method (iron tartrate absorbance method) described in "Explanation of Analytical Manual for Standard Tables of Food Composition in Japan, 5th edition" edited by Japan Food Research Laboratories (Japan Food Research Laboratories ed., Chuohoki Publishing Co., Ltd., July 2001, p. 252) . The results are shown in Table 6.

Sensory evaluation was carried out in which five trained sensory evaluators evaluated the sample beverage of Test Example 18 for the degree of suppression of paper odor based on the sample beverage of Test Example 18 at a stage before heating (i.e., the nonheated sample beverage of Test Example 18) according to an index given below. Likewise, sensory evaluation was also carried out as to the sample beverages of Test Examples 19 to 23 for the degree of suppression of paper odor based on their respective nonheated sample beverages. An average score (an average score with a decimal point was rounded to the nearest integer) of the five sensory evaluators is shown in Table 6.

<Index for degree of suppression of paper odor>

4: Paper odor equivalent to the nonheated sample beverage (no suppressive effect on paper odor)
3: Paper odor was slightly suppressed as compared with the nonheated sample beverage
2: Paper odor was suppressed as compared with the nonheated sample beverage
1: Paper odor was drastically suppressed as compared with the nonheated sample beverage (almost no paper odor was perceived)

Comprehensive flavor evaluation as a green tea beverage including the degree of suppression of paper odor mentioned above ("comprehensive evaluation") was carried out at 3 grades (poor (indicated by x-mark), good (indicated by circle), and excellent (indicated by double circle)) by five trained sensory evaluators as to the sample beverages of Test Examples 17 to 23. The results and a comment regarding the comprehensive evaluation ("comprehensive comment") are described in Table 6.

[Table 6]

| | Test Example | | | | | | |
|---|---|---|---|---|---|---|---|
| | 17 | 18 | 19 | 20 | 21 | 22 | 23 |
| JCM5805 strain (hundred-million bacteria/ 100 mL) | 600 | 600 | 600 | 600 | 600 | 600 | 600 |
| Tea polyphenol concentration (mg/100 mL) | 0 | 10 | 40 | 60 | 100 | 200 | 250 |
| Heat treatment conditions | None | 121°C 4 min | 121°C 4 min | 121°C 4 min | 121°C 4 min | 121°C 4 min | 121°C 4 min |
| Evaluation of suppression of paper odor based on nonheated sample | - | Suppressed | Suppressed | Suppressed | Suppressed | Suppressed | Suppressed |
| | - | 3 | 1 | 1 | 1 | 2 | 2 |
| Comprehensive evaluation | Paper odor absent | ○ | ◎ | ◎ | ◎ | ○ | × |
| Comprehensive comment | Paper odor absent | Tea taste was slightly weak | Favorable | Favorable | Favorable | Although paper odor was suppressed, tea-derived bitterness was slightly strong | Although paper odor was suppressed, tea-derived bitterness was very strong and made the tea beverage difficult to drink |

EP 4 309 508 A1

As is evident from the results of Table 6, paper odor was suppressed above a certain degree by the predetermined heat treatment, regardless of the tea polyphenol concentration (Test Examples 18 to 23), whereas paper odor was drastically suppressed when the tea polyphenol concentration was 40 mg/100 mL to 100 mg/100 mL (Test Examples 19 to 21).

In comprehensive evaluation from the degree of suppression of paper odor and the balance of tea taste or tea-derived bitterness, Test Examples 18 and 22 were evaluated as being good, and Test Examples 19 to 21 were evaluated as being excellent. Test Example 23 was evaluated as being poor in the comprehensive evaluation due to very strong tea-derived bitterness, though paper odor was suppressed.

The results of the evaluation of suppression of paper odor and the comprehensive evaluation showed that the tea polyphenol concentration is preferably 10 mg/100 mL to 200 mg/100 mL, particularly preferably 40 mg/100 mL to 100 mg/100 mL.

[Test 4] Evaluation of suppression of paper odor by heat treatment - 3

The following test was conducted in order to examine how the amount of the JCM5805 strain blended influenced the flavor of a green tea beverage in the case of heat-treating a green tea extract liquid containing the JCM5805 strain.

Green tea leaves (Shutoubancha (autumn-winter picking tea)) were placed in hot water of 75°C according to the amount blended (weight (g) per 100 mL) described in Table 7, and subjected to solid-liquid separation by extraction for 6 minutes to prepare a green tea extract liquid. To this green tea extract liquid, a dry powder of dead bacteria of the JCM5805 strain, L-ascorbic acid, and baking soda (sodium bicarbonate) were added and mixed to prepare each sample beverage of Test Examples 24 to 29.

The sample beverages of Test Examples 24 to 29 were heated under the heat treatment conditions described in Table 7.

[Table 7]

| Amount blended per 100 mL (g) | Test Example | | | | | |
|---|---|---|---|---|---|---|
| | 24 | 25 | 26 | 27 | 8 | 29 |
| Green tea leaf | 0.58 | 0.58 | 0.58 | 0.58 | 0.58 | 0.58 |
| JCM5805 strain | Predetermined amount | Predetermined amount | Predetermined amount | Predetermined amount | Predetermined amount | Predetermined amount |
| L-Ascorbic acid | 0.04 | 0.04 | 0.04 | 0.04 | 0.04 | 0.04 |
| Baking soda | Added so as to attain pH 6.5 | | | | | |
| pH | 6.5 | 6.5 | 6.5 | 6.5 | 6.5 | 6.5 |
| Heat treatment conditions | 121°C 4 min | 121°C 4 min | 121°C 4 min | 121°C 4 min | 121°C 4 min | 121°C 4 min |

The bacterial concentration (hundred-million bacteria/100 mL) of the JCM5805 strain in Test Examples 24 to 29 is described in Table 8.

The tea polyphenol concentrations of the sample beverages of Test Examples 24 to 29 using green tea leaves were measured by an official method (iron tartrate absorbance method) described in "Explanation of Analytical Manual for Standard Tables of Food Composition in Japan, 5th edition" edited by Japan Food Research Laboratories (Japan Food Research Laboratories ed., Chuohoki Publishing Co., Ltd., July 2001, p. 252) . The results are shown in Table 8.

Sensory evaluation was carried out in which five trained sensory evaluators evaluated the sample beverage of Test Example 24 for the degree of suppression of paper odor based on the sample beverage of Test Example 24 at a stage before heating (i.e., the nonheated sample beverage of Test Example 24) according to an index given below. Likewise, sensory evaluation was also carried out as to the sample beverages of Test Examples 25 to 29 for the degree of suppression of paper odor based on their respective nonheated sample beverages. An average score (an average score with a decimal point was rounded to the nearest integer) of the five sensory evaluators is shown in Table 8.

<Index for degree of suppression of paper odor>

4: Paper odor equivalent to the nonheated sample beverage (no suppressive effect on paper odor)
3: Paper odor was slightly suppressed as compared with the nonheated sample beverage
2: Paper odor was suppressed as compared with the nonheated sample beverage
1: Paper odor was drastically suppressed as compared with the nonheated sample beverage (almost no paper odor was perceived)

Comprehensive flavor evaluation as a green tea beverage including the degree of suppression of paper odor mentioned above ("comprehensive evaluation") was carried out at 3 grades (poor (indicated by x-mark), good (indicated by circle), and excellent (indicated by double circle)) by five trained sensory evaluators as to the sample beverages of Test Examples 24 to 29. The results and a comment regarding the comprehensive evaluation ("comprehensive comment") are described in Table 8.

[Table 8]

| | Test Example | | | | | |
|---|---|---|---|---|---|---|
| | 24 | 25 | 26 | 27 | 28 | 29 |
| JCM5805 strain (hundred-million bacteria/100 mL) | 600 | 150 | 300 | 1500 | 4500 | 6000 |
| Tea polyphenol concentration (mg/100 mL) | 40 | 40 | 40 | 40 | 40 | 40 |
| Heat treatment conditions | 121°C 4 min | 121°C 4 min | 121°C 4 min | 121°C 4 min | 121°C 4 min | 121°C 4 min |
| Evaluation of suppression of paper odor based on nonheated sample | Suppressed | Suppressed | Suppressed | Suppressed | Suppressed | Suppression absent |
| | 3 | 2 | 1 | 2 | 3 | 4 |
| Comprehensive evaluation | ○ | ◎ | ◎ | ◎ | ○ | × |

(continued)

| | Test Example | | | | | |
|---|---|---|---|---|---|---|
| | 24 | 25 | 26 | 27 | 28 | 29 |
| Comprehensive comment | Although the paper odor of the nonheated product was slightly weak, improvement was found in the paper odor of the heated product. | Favorable | Favorable | Favorable | Fermented odor derived from the JCM5805 strain was perceived . Hence, paper odor was slightly weak even in the nonheated product. | Fermented odor derived from the JCM5805 strain was too strong . Hence, paper odor was difficult to perceive even in the nonheated product. |

As is evident from the results of Table 8, paper odor was suppressed above a certain degree by the predetermined heat treatment when the JCM5805 strain was 6 to 450 billion bacteria/100 mL (Test Examples 24 to 28), and paper odor was more largely suppressed when the JCM5805 strain was 15 to 150 billion bacteria/100 mL (Test Examples 25 to 27).

When the JCM5805 strain was 600 billion bacteria/100 mL, paper odor was very slight even in the nonheated sample because fermented odor derived from the JCM5805 strain was very strong, aside from paper odor. This degree of paper odor was hardly changed by the heat treatment (Test Example 29) .

The results of the evaluation of suppression of paper odor and the comprehensive evaluation showed that the JCM5805 strain is preferably 6 to 450 billion bacteria/100 mL, particularly preferably 15 to 150 billion bacteria/100 mL.

[Test 5] Evaluation of suppression of paper odor by heat treatment - 4

The following test was conducted in order to examine whether paper odor was generated or paper odor was suppressed by a heat treatment in the case of using green tea leaves of different type from the green tea leaves (Shutoubancha (autumn-winter picking tea)) used in Tests 1 to 4, in the case of using only a green tea extract as a green tea raw material, and in the case of using oolong tea leaves or black tea leaves instead of the green tea leaves.

Green tea leaves (Nibancha (second picking tea)) were placed in hot water of 75°C according to the amount blended (weight (g) per 100 mL) described in Table 9, and subjected to solid-liquid separation by extraction for 6 minutes to prepare a green tea extract liquid. To this green tea extract liquid, a dry powder of dead bacteria of the JCM5805 strain, L-ascorbic acid, and baking soda (sodium bicarbonate) were added and mixed to prepare a sample beverage of Test Example 30.

POLYPHENON KN (manufactured by Mitsui Norin Co., Ltd.), which is a green tea extract, a dry powder of dead bacteria of the JCM5805 strain, L-ascorbic acid, and baking soda (sodium bicarbonate) were added and mixed according to the amounts blended described in Table 9 to prepare a sample beverage of Test Example 31.

Oolong tea leaves were placed in hot water of 85°C according to the amount blended described in Table 9, and subjected to solid-liquid separation by extraction for 6 minutes to prepare an oolong tea extract liquid. To this oolong tea extract liquid, a dry powder of dead bacteria of the JCM5805 strain, L-ascorbic acid, and baking soda (sodium bicarbonate) were added and mixed to prepare a sample beverage of Test Example 32.

Black tea leaves were placed in hot water of 85°C according to the amount blended described in Table 9, and subjected to solid-liquid separation by extraction for 6 minutes to prepare a black tea extract liquid. To this black tea extract liquid, a dry powder of dead bacteria of the JCM5805 strain, L-ascorbic acid, and baking soda (sodium bicarbonate) were added and mixed to prepare a sample beverage of Test Example 33.

The sample beverages of Test Examples 30 to 33 were heated under the heat treatment conditions described in Table 9.

[Table 9]

| Amount blended per 100 mL (g) | Test Example | | | |
|---|---|---|---|---|
| | 30 | 31 | 32 | 33 |
| Green tea leaf | 0.52 | - | - | - |
| JCM5805 strain | Predetermined amount | | | |
| Green tea extract | - | 0.093 | - | - |
| Oolong tea leaf | - | - | 1.05 | - |
| Black tea leaf | - | - | - | 0.71 |
| L-Ascorbic acid | 0.04 | 0.04 | 0.04 | 0.04 |
| Baking soda | Added so as to attain pH 6.5 | | | |
| pH | 6.5 | 6.5 | 6.5 | 6.5 |
| Heat treatment conditions | 121°C 4 min | 121°C 4 min | 121°C 4 min | 121°C 4 min |

The bacterial concentration (hundred-million bacteria/100 mL) of the JCM5805 strain in Test Examples 30 to 33 is described in Table 10.

The tea polyphenol concentrations of the sample beverages of Test Examples 30 to 33 using green tea leaves were measured by an official method (iron tartrate absorbance method) described in "Explanation of Analytical Manual for Standard Tables of Food Composition in Japan, 5th edition" edited by Japan Food Research Laboratories (Japan Food Research Laboratories ed., Chuohoki Publishing Co., Ltd., July 2001, p. 252) . The results are shown in Table 10.

Sensory evaluation was carried out in which five trained sensory evaluators evaluated the sample beverage of Test Example 30 for the degree of suppression of paper odor based on the sample beverage of Test Example 30 at a stage before heating (i.e., the nonheated sample beverage of Test Example 30) according to an index given below. Likewise, sensory evaluation was also carried out as to the sample beverages of Test Examples 31 to 33 for the degree of suppression of paper odor based on their respective nonheated sample beverages. An average score (an average score with a decimal point was rounded to the nearest integer) of the five sensory evaluators is shown in Table 10.

<Index for degree of suppression of paper odor>

4: Paper odor equivalent to the nonheated sample beverage (no suppressive effect on paper odor)
3: Paper odor was slightly suppressed as compared with the nonheated sample beverage
2: Paper odor was suppressed as compared with the nonheated sample beverage
1: Paper odor was drastically suppressed as compared with the nonheated sample beverage (almost no paper odor was perceived)

Comprehensive flavor evaluation as a green tea beverage including the degree of suppression of paper odor mentioned above ("comprehensive evaluation") was carried out at 3 grades (poor (indicated by x-mark), good (indicated by circle), and excellent (indicated by double circle)) by five trained sensory evaluators as to the sample beverages of Test Examples 30 to 33. The results and a comment regarding the comprehensive evaluation ("comprehensive comment") are described in Table 10.

[Table 10]

| | Test Example | | | |
|---|---|---|---|---|
| | 30 | 31 | 32 | 33 |
| JCM 5805 strain (hundred-million bacteria/100 mL) | 600 | 600 | 600 | 600 |
| Tea polyphenol concentration (mg/100 mL) | 40 | 40 | 40 | 40 |
| Heat treatment conditions | 121°C 4 min | 121°C 4 min | 121°C 4 min | 121°C 4 min |

(continued)

| | Test Example | | | |
|---|---|---|---|---|
| | 30 | 31 | 32 | 33 |
| Evaluation of suppression of paper odor based on nonheated sample | Suppressed | Suppressed | Suppressed | Suppressed |
| | 2 | 2 | 2 | 2 |
| Comprehensive evaluation | ◎ | ◎ | ◎ | ◎ |
| Comprehensive comment | Favorable | Favorable | Favorable | Favorable |

As is evident from the results of Table 10, it was shown that paper odor occurred from the tea component and the JCM5805 strain and such paper odor was suppressed by the predetermined heat treatment in all of the case of using green tea leaves (Nibancha (second picking tea)) of different type from the green tea leaves (Shutoubancha (autumn-winter picking tea)) used in Tests 1 to 4 (Test Example 30), the case of using only a green tea extract as a green tea raw material (Test Example 31), the case of using oolong tea leaves instead of the green tea leaves (Test Example 32), and the case of using black tea leaves instead of the green tea leaves (Test Example 33).

[Test 6] Evaluation of suppression of paper odor by heat treatment - 5

The following test was conducted in order to examine whether paper odor was suppressed by a heat treatment at a higher temperature than the heating temperature of the heat treatment in Tests 1 to 5 for a shorter time in the case of heat-treating a green tea extract liquid containing the JCM5805 strain.

Green tea leaves (Shutoubancha (autumn-winter picking tea)) were placed in hot water of 75°C according to the amount blended (weight (g) per 100 mL) described in Table 11, and subjected to solid-liquid separation by extraction for 6 minutes to prepare a green tea extract liquid. To this green tea extract liquid, a dry powder of dead bacteria of the JCM5805 strain, L-ascorbic acid, and baking soda (sodium bicarbonate) were added and mixed to prepare sample beverages of Test Examples 34 and 35. These sample beverages were heated under the heat treatment conditions described in Table 11.

[Table 11]

| Amount blended per 100 mL (g) | Test Example | |
|---|---|---|
| | 34 | 35 |
| Green tea leaf | 0.58 | 0.58 |
| JCM5805 strain | Predetermined amount | |
| L-Ascorbic acid | 0.04 | 0.04 |
| Baking soda | Added so as to attain pH 6.5 | |
| pH | 6.5 | 6.5 |
| Heat treatment conditions | 130.5°C 30 sec | 137.5°C 30 sec |

The bacterial concentration (hundred-million bacteria/100 mL) of the JCM5805 strain in Test Examples 34 and 35 is described in Table 12.

The tea polyphenol concentrations of the sample beverages of Test Examples 34 and 35 using green tea leaves were measured by an official method (iron tartrate absorbance method) described in "Explanation of Analytical Manual for Standard Tables of Food Composition in Japan, 5th edition" edited by Japan Food Research Laboratories (Japan Food Research Laboratories ed., Chuohoki Publishing Co., Ltd., July 2001, p. 252) . The results are shown in Table 12.

Sensory evaluation was carried out in which five trained sensory evaluators evaluated the sample beverage of Test Example 34 for the degree of suppression of paper odor based on the sample beverage of Test Example 34 at a stage before heating (i.e., the nonheated sample beverage of Test Example 34) according to an index given below. Likewise, sensory evaluation was also carried out as to the sample beverage of Test Example 35 for the degree of suppression of paper odor based on its nonheated sample beverage. An average score (an average score with a decimal point was rounded to the nearest integer) of the five sensory evaluators is shown in Table 12.

<Index for degree of suppression of paper odor>

4: Paper odor equivalent to the nonheated sample beverage (no suppressive effect on paper odor)
3: Paper odor was slightly suppressed as compared with the nonheated sample beverage
2: Paper odor was suppressed as compared with the nonheated sample beverage
1: Paper odor was drastically suppressed as compared with the nonheated sample beverage (almost no paper odor was perceived)

[Table 12]

| | Test Example | |
|---|---|---|
| | 34 | 35 |
| JCM5805 strain (hundred-million bacteria/100 mL) | 600 | 600 |
| Tea polyphenol concentration (mg/100 mL) | 40 | 40 |
| Heat treatment conditions | 130.5°C 30 sec | 137.5°C 30 sec |
| Evaluation of suppression of paper odor based on nonheated sample | Suppressed | Suppressed |
| | 1 | 1 |
| Comprehensive evaluation | ◎ | ◎ |
| Comprehensive comment | Favorable | Favorable |

As is evident from the results of Table 12, it was shown that paper odor was suppressed even under the heat treatment conditions of 130.5°C for 30 seconds or 137.5°C for 30 seconds.

**Claims**

1. A packaged tea beverage obtainable by a production method comprising a step of including a JCM5805 strain in a tea extract liquid having a tea polyphenol concentration of 10 mg or more/100 mL, and performing a treatment of heating to 100°C or higher.

2. The packaged tea beverage according to claim 1, wherein a content of the JCM5805 strain is 6 billion or more bacteria/100 mL.

3. The packaged tea beverage according to claim 1 or 2, wherein the treatment of heating is a treatment of heating of 111 to 150°C with an $F_0$ value of 1 to 40.

4. The packaged tea beverage according to any one of claims 1 to 3, wherein the tea polyphenol concentration is 10 mg/100 mL to 200 mg/100 mL.

5. The packaged tea beverage according to any one of claims 1 to 4, wherein the tea extract liquid is a green tea extract liquid, and the packaged tea beverage is a packaged green tea beverage.

6. A method for producing a packaged tea beverage, comprising a step of including a JCM5805 strain in a tea extract liquid having a tea polyphenol concentration of 10 mg or more/100 mL, and performing a treatment of heating to 100°C or higher, in the production of the packaged tea beverage.

7. A method for suppressing paper odor caused by a tea component and a JCM5805 strain in a packaged tea beverage, comprising a step of including a JCM5805 strain in a tea extract liquid having a tea polyphenol concentration of 10 mg or more/100 mL, and performing a treatment of heating to 100°C or higher, in the production of the packaged tea beverage.

[Fig. 1]

| INTERNATIONAL SEARCH REPORT | International application No. |
|---|---|
| | **PCT/JP2022/011201** |

**A. CLASSIFICATION OF SUBJECT MATTER**

***A23F 3/16*** (2006.01)i
FI: A23F3/16

According to International Patent Classification (IPC) or to both national classification and IPC

**B. FIELDS SEARCHED**

Minimum documentation searched (classification system followed by classification symbols)

A23F3/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | WO 2006/028164 A1 (KIRIN BEER KK) 16 March 2006 (2006-03-16)<br>paragraphs [0019], [0022], [0024], [0027], examples 1-3, table 1 | 1-7 |
| Y | 藤原大介, 城内健太, 杉村哲, ウイルス感染防御を統括するプラズマサイトイド樹状細胞を活性化する乳酸菌の開発, 化学と生物, 2015, non-official translation (FUJIWARA, Daisuke, JOUNAI, Kenta, SUGIMURA, Tetsu. Development of lactic acid bacteria that activate plasmacytoid dendritic cells that control virus infection defense. Kagaku to seibutsu.) particularly, fig. 2, 10, column of "In conclusion" | 1-7 |
| A | JP 2019-103408 A (ASAHI SOFT DRINKS CO., LTD.) 27 June 2019 (2019-06-27)<br>paragraphs [0001], [0026], [0062], [0073], example 3, table 5 | 1-7 |
| A | JP 2013-220055 A (KIRIN BEVERAGE CORP.) 28 October 2013 (2013-10-28)<br>claims 1, 5, paragraph [0008], tables 1-2, 5, test examples 4-5 | 1-7 |

☐ Further documents are listed in the continuation of Box C.  ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **02 May 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/011201**

| Patent document cited in search report | | | Publication date (day/month/year) | Patent family member(s) | | | Publication date (day/month/year) |
|---|---|---|---|---|---|---|---|
| WO | 2006/028164 | A1 | 16 March 2006 | US | 2008/0096266 | A1 | |
| | | | | paragraphs [0018], [0020], [0029], [0032], examples 1-3, table 1 | | | |
| | | | | EP | 1790715 | A1 | |
| | | | | CA | 2579709 | A | |
| | | | | CN | 101018853 | A | |
| JP | 2019-103408 | A | 27 June 2019 | (Family: none) | | | |
| JP | 2013-220055 | A | 28 October 2013 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019122316 A

**Non-patent literature cited in the description**

- Explanation of Analytical Manual for Standard Tables of Food Composition in Japan. Chuohoki Publishing Co., Ltd, July 2001, 252

- Soft Drinks. Korin Co., Ltd,